Europäisches Patentamt

European Patent Office

Office européen des brevets

(19)

(11) Numéro de publication: **0 006 811**
**A2**

(12) **DEMANDE DE BREVET EUROPEEN**

(21) Numéro de dépôt: 79400420.0

(22) Date de dépôt: 25.06.79

(51) Int. Cl.³: **G 02 F 1/17**

(30) Priorité: 30.06.78 FR 7819621

(43) Date de publication de la demande: 09.01.80
**Bulletin 80/1**

(84) Etats contractants désignés: **AT CH DE GB IT NL SE**

(71) Demandeur: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Meyer, Robert, Chemin Bonatière Saint Nazaire les Eymes, F-38330 Saint Ismier (FR)**

(74) Mandataire: **Mongredien, André et al, c/o Brevatome 25, rue de Ponthieu, F-75008 Paris (FR)**

(54) Cellule d'affichage électrolytique à dépôt métallique et procédé pour éviter un appauvrissement en métal de certaines zones de la contre-électrode d'une telle cellule.

(57) La présente invention concerne une cellule d'affichage électrolytique du type comportant une électrode transparente de forme adaptée à l'affichage, une contre-électrode en métal, dit premier métal, un électrolyte intercalé entre ladite électrode et ladite contre-électrode et des moyens pour alimenter en courant électrique ladite électrode et ladite contre-électrode de façon à provoquer sur certaines parties de ladite électrode le dépôt ou la dissolution d'une couche métallique formée à partir dudit premier métal.

Cette cellule se caractérise en ce que ladite contre-électrode comprend de plus un matériau conducteur de l'électricité, inerte chimiquement et électrochimiquement dans les conditions de fonctionnement de ladite cellule, ledit matériau et ledit premier métal étant associés dans ladite contre-électrode de façon telle que ledit premier métal soit en contact avec l'électrolyte et que ledit matériau conducteur de l'électricité forme un film continu.

Application à l'affichage.

EP 0 006 811 A2

La présente invention a pour objet une cellule d'affichage électrolytique à dépôt métallique et plus précisément une structure de contre-électrode pour une cellule de ce type.

Les cellules d'affichage électrolytique à dépôt métallique connues actuellement, comportent généralement une électrode transparente de forme adaptée à l'affichage, une contre-électrode en métal, un électrolyte intercalé entre ladite électrode et ladite contre-électrode et des moyens pour alimenter en courant électrique ladite électrode et ladite contre-électrode de façon à provoquer sur certaines parties de ladite électrode le dépôt ou la dissolution d'une couche métallique formée à partir du métal de la contre-électrode.

Dans des cellules de ce type, à électrolyte liquide, la contre-électrode est habituellement constituée par une couche métallique plus ou moins épaisse, par exemple par une couche d'argent déposée sur un support isolant inerte tel qu'une lame de verre, et l'affichage est obtenu lorsqu'on provoque sur certaines parties de l'électrode le dépôt d'une couche du métal qui constitue la contre-électrode, par exemple d'une couche d'argent, dont les propriétés optiques (réflexion, absorption) sont susceptibles de faire naître un signe (caractère, courbe, segment, etc. ...).

Les contre-électrodes utilisées dans de telles cellules présentent l'inconvénient de subir une certaine dégradation au cours du fonctionnement de la cellule, ce qui conduit à une détérioration de l'aspect de l'affichage et rend la cellule pratiquement inutilisable après une durée limitée qui correspond généralement à un nombre de commutations de l'ordre de $10^5$ cycles.

En effet, le fonctionnement d'une telle cellule d'affichage électrolytique à dépôt métallique est basé sur la réaction électrochimique :

$$M \rightleftharpoons M^{n+} + ne^-$$

dans laquelle M représente le métal de valence n qui forme le dépôt métallique.

B. 6458.3

0006811

Or, cette réaction n'est pas parfaitement symétrique car le dépôt qui correspond à la réaction $M^n + ne^- \longrightarrow M$ se caractérise par une surtension $\eta_c$ supérieure à la surtension $\eta_a$ caractéristique de la réaction inverse $M \rightarrow M^{n+} + ne^-$ qui correspond à la dissolution du dépôt de métal M.

Aussi, comme dans une cellule d'affichage électrolytique, la surface de la contre-électrode est très grande par rapport à celle de l'électrode active qui présente une forme adaptée à l'affichage, il en résulte que, lors de l'affichage, le métal de la contre-électrode est dissous préférentiellement sur les parties de la contre-électrode situées en regard des parties de l'électrode servant à l'affichage, et que, lors de l'effacement, le métal M a tendance à se redéposer sur une surface beaucoup plus importante de la contre-électrode, ce qui provoque à la longue un appauvrissement en métal de certaines parties de la contre-électrode.

Lorsque le film de métal de la contre-électrode est relativement mince, par exemple, de l'ordre de quelques dizaines de microns, le phénomène d'appauvrissement peut aller jusqu'à la disparition complète du film en certains endroits. Dans ce cas, lors de l'affichage, le dépôt de métal sur l'électrode active ne peut plus se produire que sur les bords des parties destinées à l'affichage ; l'aspect de l'affichage devient de ce fait inhomogène et inacceptable et la cellule est inutilisable.

Pour remédier à cet inconvénient, on a envisagé d'augmenter l'épaisseur de la couche de métal qui constitue la contre-électrode, mais cette solution est peu satisfaisante car elle nécessite une quantité de métal importante, ce qui augmente de façon non négligeable le prix de revient de la cellule, notamment lorsque ce métal est de l'argent.

Par ailleurs, on connaît un dispositif d'affichage électro-optique à électrolyte solide (brevet français 2.260.167), dans lequel une contre-électrode métallique est recouverte partiellement d'isolant comme l'électrode et présente ainsi une forme complémentaire à celle de l'électrode. Dans un tel dispositif, lors de l'effacement,

B. 6458.3 MdT

le métal déposé sur l'électrode à partir de la contre-électrode ne peut pas se redéposer sur une surface plus importante de la contre-électrode et un phénomène d'appauvrissement en métal de certaines parties de la contre-électrode ne risque pas de se produire.

Cependant, cette solution présente l'inconvénient de nécessiter, au cours du montage de la cellule, la mise en coïncidence parfaite des motifs de la contre-électrode et des motifs correspondants de l'électrode, ce qui conduit à certaines difficultés.

On connaît également par le brevet français 1.435.521 un dispositif de commande de lumière constitué par un électrolyte intercalé entre une électrode continue et une contre-électrode localisée, génératrice de particules métalliques, qui est constituée, par exemple, par un fil de platine recouvert de cadmium. Dans ce dispositif, l'application d'une différence de potentiel permet de déposer graduellement sur l'ensemble de la surface de l'électrode des particules métalliques. A l'effacement, ces particules métalliques reviennent toutes sur la contre-électrode localisée et il ne peut se produire un phénomène d'appauvrissement en métal de la contre-électrode.

La présente invention a pour objet une cellule d'affichage électrolytique dans laquelle la contre-électrode est continue et présente une structure particulière qui permet justement d'éviter qu'il ne puisse se produire à la longue un appauvrissement en métal de certaines zones de la contre-électrode.

A cet effet, la cellule d'affichage électrolytique selon l'invention est du type comportant une électrode transparente de forme adaptée à l'affichage, une contre-électrode en métal, dit premier métal, un électrolyte intercalé entre ladite électrode et ladite contre-électrode, et des moyens pour alimenter en courant électrique ladite électrode et ladite contre-électrode de façon à provoquer sur certaines parties de ladite électrode le dépôt ou la dissolution d'une couche métallique formée à partir dudit premier métal, et elle se caractérise en ce que ladite contre-électrode est continue et comprend de plus un matériau conducteur de l'électricité, inerte chimiquement et électrochimiquement dans les conditions de fonctionnement de ladite cellule, ledit matériau et ledit premier métal étant associés dans ladite contre-électrode de façon telle que ledit premier métal soit en contact avec l'électrolyte et que ledit matériau conducteur de l'électricité forme un film continu.

La cellule d'affichage électrolytique telle que caractérisée ci-dessus tire avantageusement profit du fait, qu'en utilisant une contre-électrode continue comprenant non-seulement le premier métal qui participe à la réaction électrochimique de dépôt de la couche métallique, mais également un film continu d'un autre matériau conducteur de l'électricité, inerte chimiquement et électrochimiquement dans les conditions de fonctionnement de ladite cellule, on améliore la durée de vie de la cellule en évitant que l'appauvrissement en métal de la contre-électrode ne puisse conduire à une rupture du contact électrique sur certaines zones de la contre-électrode.

En effet, bien que lors de l'affichage, le métal de la contre-électrode soit également dissous préférentiellement sur les parties de la contre-électrode située en regard des parties de l'électrode destinées à l'affichage, et que ce phénomène puisse éventuellement conduire à la disparition du métal sur certaines parties de la contre-électrode, ce dernier a la possibilité de se redéposer ensuite sur ces parties, lors de l'effacement, étant donné que le contact électrique n'est pas perdu grâce à la présence du film de matériau conducteur de l'électricité. Ainsi, on atteint un profil d'équilibre qui permet d'augmenter la durée de vie de la cellule.

Selon l'invention, il est indispensable que le matériau conducteur de l'électricité soit inerte chimique-ment et électrochimiquement dans les conditions de fonctionnement de la cellule, c'est-à-dire, qu'il ne puisse pas

B. 6458.3 MdT

réagir avec l'électrolyte ou avec le premier métal de la contre-électrode, notamment sous l'effet des tensions appliquées entre les électrodes, afin d'éviter la disparition du film de matériau conducteur de l'électricité.

A titre d'exemple de matériaux susceptibles d'être utilisés, on peut citer en particulier un second métal ayant un potentiel d'oxydoréduction supérieur à celui du premier métal de la contre-électrode.

Lorsque le premier métal est de l'argent, le matériau conducteur est avantageusement constitué par un métal noble tel que le palladium, l'or ou le platine.

Selon un premier mode de réalisation de la contre-électrode de la cellule de l'invention, ledit premier métal et ledit matériau conducteur de l'électricité sont associés dans la contre-électrode de façon à former deux couches superposées constituées respectivement par une première couche dudit matériau conducteur de l'électricité et par une seconde couche dudit premier métal, la seconde couche dudit premier métal étant en contact avec ledit électrolyte.

Dans ce mode de réalisation, lesdites couches sont avantageusement disposées sur un support en matériau isolant électrique, ladite première couche étant en contact avec ledit support.

Selon une variante de ce mode de réalisation, ladite première couche constitue le support de ladite contre-électrode.

Selon un second mode de réalisation de la contre-électrode de la cellule de l'invention, ledit premier métal et ledit matériau conducteur de l'électricité sont associés dans ladite contre-électrode sous la forme d'une couche d'alliage, de préférence disposée sur un support en matériau isolant électrique.

L'invention a également pour objet un procédé pour éviter un appauvrissement en métal de certaines zones de la contre-électrode d'une cellule d'affichage électrolytique comportant un électrolyte intercalé entre une électrode de forme adaptée à l'affichage et une contre-électrode continue en un métal qui participe à la réalisation de l'affichage.

Ce procédé se caractérise en ce qu'on associe audit métal de la contre-électrode un autre matériau conducteur de l'électricité de façon telle que ledit métal reste en contact avec l'électrolyte et que le matériau conducteur de l'électricité forme un film continu supportant ledit métal.

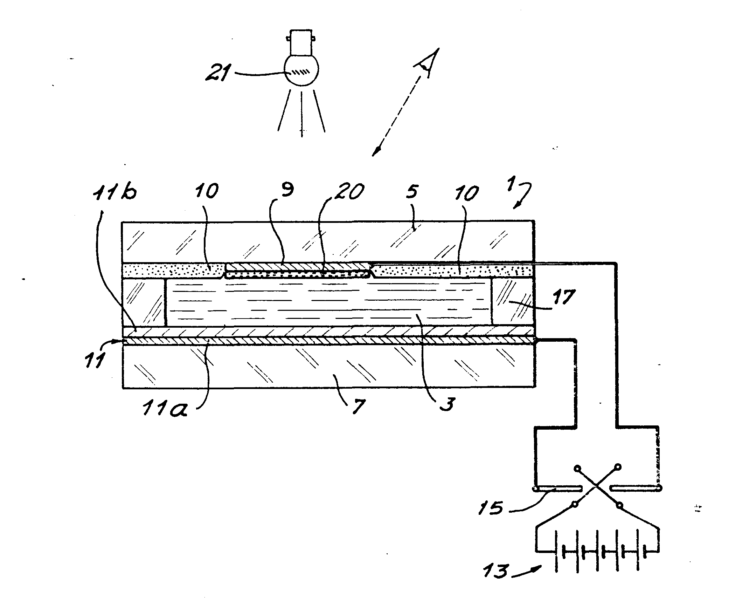

L'invention sera mieux comprise à la lecture de la description qui suit donnée bien entendu à titre illustratif et non limitatif et se référant au dessin annexé sur lequel on a représenté en coupe verticale un mode de réalisation d'une cellule d'affichage électrolytique, selon l'invention.

Sur cette figure, on voit que la cellule d'affichage électrolytique 1 comprend un électrolyte 3 intercalé entre deux parois 5 et 7 supportant respectivement une électrode 9 et une contre-électrode 11.

L'électrode 9 qui a une forme adaptée à l'affichage (points, segments ...) comprend dans cet exemple plusieurs parties conductrices (parties actives) dont une seule est représentée sur le dessin. Ces parties conductrices sont isolées électriquement entre elles au moyen d'un isolant électrique 10 et elles peuvent être alimentées individuellement en courant électrique à partir d'une source de tension qui peut être reliée d'autre part à la contre-électrode 11.

Sur cette figure, on voit que la contre-électrode 11 est continue et s'étend sur toute la surface de la paroi 7 alors que les parties actives de l'électrode 9 occupent une surface beaucoup moins importante de la paroi 5.

La partie active de l'électrode 9, visible sur cette figure, et la contre-électrode 11 sont reliées à une source de tension 13 par l'intermédiaire d'un commutateur 15 qui permet d'appliquer entre cette partie de l'électrode 9 et la contre-électrode 11 une différence de potentiel continue dans un sens ou dans l'autre selon la position du commutateur 15. Des cales 17 sont intercalées

B.6458.3 MdT

entre l'électrode 9 et la contre-électrode 11 afin de donner à l'électrolyte une épaisseur appropriée.

On précise que les autres parties actives de l'électrode 9 sont aussi reliées à la source de tension 13 par des moyens appropriés de façon à pouvoir appliquer entre une ou plusieurs parties de l'électrode 9 et la contre-électrode 11 une différence de potentiel continue dans un sens ou dans l'autre.

Selon l'invention, la contre-électrode 11 comprend un métal et un autre matériau conducteur de l'électricité qui, dans l'exemple représenté sur cette figure, sont associés sous la forme de deux couches superposées constituées respectivement par une première couche 11a de matériau conducteur de l'électricité, inerte chimiquement et électrochimiquement dans les conditions de fonctionnement de la cellule, et une seconde couche 11b du métal qui participe à la réaction électrochimique.

La première couche 11a qui est en contact avec la paroi 7 est réalisée par exemple en platine et la couche 11b qui est en contact avec l'électrolyte est en argent.

Avec une contre-électrode de ce type, l'électrolyte 3 est avantageusement constitué par un sel d'argent tel que du bromure ou de l'iodure d'argent, éventuellement mélangé à un sel-support tel qu'un iodure ou un bromure alcalin, en solution dans un solvant organique tel qu'un mélange d'acétonitrile et d'alcool méthylique. On précise que l'électrode 9 peut être constituée par un oxyde conducteur transparent tel que $In_2O_3$ ou $SnO_2$, que les parois 5 et 7 de support des électrodes sont avantageusement constituées par des lames de verre et que les cales d'épaisseur 17 sont en verre.

Comme dans toutes les cellules de ce type, on réalise l'affichage d'un signe sur l'électrode transparente 9 en connectant certaines parties de cette dernière au pôle négatif de la source de tension 13 de façon à obtenir un dépôt d'argent 20 d'une épaisseur appropriée, par exemple,

B. 6458.3 MdT

inférieure à 10 nm, sur ces parties de l'électrode qui présentent la forme du signe à afficher. On précise que ce dernier peut être observé de l'extérieur lorsqu'on éclaire la cellule au moyen d'une source de lumière 21, car la couche d'argent déposée présentant ces caractéristiques absorbe en grande partie la lumière ; dans ce cas, pour améliorer le contraste, on peut masquer la contre-électrode par tout moyen approprié, par exemple, en disposant devant la contre-électrode un écran poreux.

Cependant, le signe affiché peut aussi être observé de l'extérieur par réflexion de la lumière sur la couche d'argent.

Le signe affiché peut ensuite être effacé en inversant la position du commutateur 15 pour relier les parties de l'électrode 9 revêtues de dépôt d'argent 20 au pôle positif de la source de tension 13 de façon à assurer la dissolution du dépôt d'argent 20 formé au préalable sur les parties correspondantes de l'électrode 9.

Lors de ces opérations d'affichage et d'effacement, le métal de la couche 11b participe à la réaction électrochimique en étant dissous lors de l'affichage, puis redéposé sur la contre-électrode lors de l'effacement.

Grâce à la présence de la couche conductrice 11a, l'appauvrissement en métal de la couche 11b qui peut aller éventuellement jusqu'à la disparition de cette dernière sur certaines parties de la contre-électrode, lors de l'affichage, ne perturbe pas le fonctionnement de la cellule car le contact électrique n'étant jamais rompu, on atteint un profil d'équilibre en ayant la possibilité de redéposer du métal sur ces parties lors des opérations ultérieures d'effacement.

Aussi, une cellule d'affichage électrolytique comportant une contre-électrode de ce type, peut fonctionner pendant une durée correspondant à plus de $10^7$ cycles sans présenter une dégradation de l'aspect de l'affichage, alors que la durée de vie d'une cellule comportant une contre-électrode constituée par un film d'argent d'une épaisseur de 50µ correspond à $10^5$ cycles environ.

Par ailleurs, il convient de noter que compte tenu des avantages apportés par la présence de la couche conductrice 11a de matériau inerte, l'épaisseur de la couche 11b peut être très faible, par exemple, de l'ordre de 1000 $\overset{\circ}{A}$, ce qui permet de limiter le prix de revient de la cellule.

Bien que sur cette figure on ait représenté une contre-électrode comportant deux couches superposées, disposées sur un support, on précise que, selon l'invention, la contre-électrode 11 peut ne pas être disposée sur une paroi support en matériau isolant électrique, la première couche 11a de matériau inerte conducteur de l'électricité étant dans ce cas d'épaisseur suffisante pour jouer le rôle de support de la couche 11b de métal. Par ailleurs, on peut aussi, selon l'invention, associer le métal qui participe au dépôt et le matériau inerte en les mélangeant intimement dans une seule couche disposée, de préférence, sur un support isolant, par exemple sous la forme d'une couche d'alliage du métal et du matériau inerte.

Dans l'exemple de réalisation donné sur cette figure, la première couche de platine a avantageusement une épaisseur de 1.000 à 2.000 $\overset{\circ}{A}$ et la couche d'argent une épaisseur de 5 à 10 microns.

Une contre-électrode de ce type peut être réalisée par toute technique connue, en particulier par des techniques de dépôt sous vide ou de sérigraphie.

A titre d'exemple, on peut réaliser la contre-électrode 11 de la façon suivante : on dépose sur une lame de verre qui constitue la paroi 7 servant de support à la contre-électrode, un film de platine de 1.000 à 2.000 $\overset{\circ}{A}$ d'épaisseur par pulvérisation cathodique, le temps de dépôt étant de l'ordre de 3 à 5 minutes ; on dépose ensuite sur ce film de platine un film d'argent de 5 à 10 microns d'épaisseur par sérigraphie, et on effectue enfin un traitement de recuit de l'argent, selon les méthodes habituelles.

B. 6458.3 MdT

De même, on peut déposer le film d'argent par évaporation ou pulvérisation cathodique, ce qui permet de former un film très mince, par exemple de l'ordre de 1.000 Å.

## REVENDICATIONS

1. Cellule d'affichage électrolytique du type comportant une électrode transparente de forme adaptée à l'affichage, une contre-électrode en métal, dit premier métal, un électrolyte intercalé entre ladite électrode et ladite contre-électrode et des moyens pour alimenter en courant électrique ladite électrode et ladite contre-électrode de façon à provoquer sur certaines parties de ladite électrode le dépôt ou la dissolution d'une couche métallique formée à partir dudit premier métal, caractérisée en ce que ladite contre-électrode est continue et comprend de plus un matériau conducteur de l'électricité, inerte chimiquement et électrochimiquement dans les conditions de fonctionnement de ladite cellule, ledit matériau et ledit premier métal étant associés dans ladite contre-électrode de façon telle que ledit premier métal soit en contact avec l'électrolyte et que ledit matériau conducteur de l'électricité forme un film continu.

2. Cellule selon la revendication 1, caractérisé en ce que ledit premier métal et ledit matériau conducteur de l'électricité sont associés dans la contre-électrode de façon à former deux couches superposées constituées respectivement par une première couche dudit matériau conducteur de l'électricité et par une seconde couche dudit premier métal, la seconde couche dudit premier métal étant en contact avec ledit électrolyte.

3. Cellule selon la revendication 2, caractérisée en ce que ladite première couche constitue le support de ladite contre-électrode.

4. Cellule selon la revendication 2, caractérisée en ce que lesdites couches sont disposées sur un support en matériau isolant électrique, ladite première couche étant en contact avec ledit support.

5. Cellule selon la revendication 1, caractérisée en ce que ledit premier métal et ledit matériau conducteur de l'électricité sont associés dans ladite contre-électrode sous la forme d'une couche d'alliage.

B. 6458.3 MdT

6. Cellule selon la revendication 5, caractérisée en ce que la couche d'alliage est disposée sur un support en matériau isolant électrique.

7. Cellule selon l'une quelconque des revendications 1 à 6, caractérisée en ce que ledit matériau conducteur de l'électricité est un deuxième métal ayant un potentiel d'oxydo-réduction supérieur à celui dudit premier métal.

8. Cellule selon l'une quelconque des revendications 1 à 7, caractérisée en ce que ledit premier métal est de l'argent.

9. Cellule selon la revendication 8, caractérisée en ce que ledit second métal est choisi dans le groupe comprenant le palladium, l'or et le platine.

10. Procédé pour éviter un appauvrissement en métal de certaines zones de la contre-électrode d'une cellule d'affichage électrolytique comportant un électrolyte intercalé entre une électrode de forme adaptée à l'affichage et une contre-électrode continue en un métal qui participe à la réalisation de l'affichage, caractérisé en ce qu'on associe audit métal de la contre-électrode un autre matériau conducteur de l'électricité de façon telle que ledit métal reste en contact avec l'électrolyte et que le matériau conducteur de l'électricité forme un film continu supportant ledit métal.

ORIGINAL : Par procuration du COMMISSARIAT A L'ENERGIE ATOMIQUE
DES TERMES Monique

B. 6458.3 MdT

0006811

1/1